# EUROPÄISCHE PATENTSCHRIFT

(11) **EP 1 055 205 B1**
(45) Veröffentlichungstag und Bekanntmachung des Hinweises auf die Patenterteilung: **29.03.2006**
(21) Anmeldenummer: 99908745.5
(22) Anmeldetag: 22.01.1999
(51) Int. Cl.: G07F 7/00

(54) **VERFAHREN ZUR ÜBERWACHUNG EINES GERÄTEBEDIENUNGSVORGANGES UND MIT DIESEM ÜBERWACHTE SELBSTBEDIENUNGSEINRICHTUNG**
METHOD FOR MONITORING THE EXPLOITATION PROCESS OF AN APPARATUS AND SELF-SERVICE DEVICE MONITORED ACCORDING TO SAID METHOD
PROCEDE DE SURVEILLANCE DU PROCESSUS D'EXPLOITATION D'APPAREILS ET DISPOSITIF DE LIBRE-SERVICE DONT LA SURVEILLANCE EST ASSUREE A L'AIDE DUDIT PROCEDE

(30) Priorität: 13.02.1998 DE 19806024
(43) Veröffentlichungstag der Anmeldung: 29.11.2000
(73) Patentinhaber: Wincor Nixdorf International GmbH, 33106 Paderborn (DE)
(72) Erfinder: BURCHART, Joachim, D-33189 Schlangen (DE); TEWES, Udo, D-32547 Bad Oeynhausen (DE); VOSS, Hans, Günter, D-33098 Paderborn (DE)
(86) Internationale Anmeldenummer: PCT/DE1999/000157
(87) Internationale Veröffentlichungsnummer: WO 1999/041713

(56) Entgegenhaltungen:
- EP-A- 1 329 839
- US-A- 5 073 950
- US-A- 5 594 806

## Beschreibung

Die Erfindung betrifft ein Verfahren zur Überwachung eines Gerätebedienungsvorganges und eine mit diesem überwachte Selbstbedienungseinrichtung. Sie geht aus von der US-Patentschrift 5,594,806.

Selbstbediente elektronische Geräte, insbesondere Automaten wie Geldausgabegeräte und Selbstbedienungsterminals unterliegen zunehmend Angriffen durch nicht autorisierte Benutzer, mit dem Ziel, unberechtigt Zugang zu den Leistungen des Automaten zu erlangen. Hierzu sind sogenannte "Vorbauten" bekannt geworden, bei denen beispielsweise vor einen Kartenleser eine Nachbildung eines Kartenleser-Mundstücks gesetzt wird, welche die Karte unberechtigterweise einbehält. Weiterhin wurde von Versuchen berichtet, persönliche Identifikationsnummern, sogenannte PIN-Nummern, auszuspähen, indem die PIN-Tastatur mit einer Sensoreinrichtung für Tastenbetätigungen überbaut wurde.

Ein weiteres Problem ist in Versuchen zu sehen, Geräte der genannten Art durch gezielte Falschbedienung außer Funktion zu setzen.

Die US 5,594,806 betrifft ein System zur Personenidentifizierung an Hand des Knöchelprofils der Faust. Der Druckschrift ist eine Anordnung zu entnehmen, umfassend eine elektronische Kamera und ein Bildinformationen verarbeitendes Datenverarbeitungsgerät, in welchem Bildmuster gespeichert sind, und in dem ein Vergleicher angeordnet ist, mit dem eine von der Kamera gelieferte Bildinformation mit einem gespeicherten Bildmuster verglichen wird, und der abhängig von dem Vergleichsergebnis ein Signal erzeugt, mit dem das weitere Verhalten des Gerätes, in dem das System verwendet wird, beeinflußt wird.

Das Personenidentifizierungssystem dient dazu, in einem Erfassungsvorgang das Knöchelprofil der Faust eines Probanden zu vermessen und die nur für diese Person charakteristischen Meßdaten zu speichern. Dazu muß der Proband einen Handgriff erfassen und in das Sichtfeld der Kamera drehen. Dadurch wird erreicht, daß die Faust in eine reproduzierbare Haltung gezwungen wird. Bei einem späteren Identifizierungsvorgang ist der Handgriff in gleicher Weise zu erfassen und in das Sichtfeld zudrehen, wobei das Knöchelprofil der Faust erneut vermessen und die neu gewonnenen mit den gespeicherten Meßdaten verglichen werden. Dabei ist die Identifizierungssicherheit um so größer je genauer beide Meßergebnisse übereinstimmen.

Aus der US 5,073,950 ist ein ähnliches System bekannt, bei dem die Meßdaten die Länge und ein Breitenprofil der Finger des Probanden enthalten. Um diese zu erfassen muß der Proband seine Hand auf eine von der Rückseite beleuchtete Platte legen. Der Schattenriß der Hand wird mit Hilfe einer elektronischen Kamera vermessen.

Da die Fingerplazierung während der erstmaligen und bei der späteren erneuten Erfassung nicht dieselbe ist, wäre ein direkter Vergleich zwischen den Daten nicht aussagekräftig. Aus diesem Grunde werden die Daten sowohl bei der Ersterfassung als auch bei der späteren erneuten Erfassung einem Normierungsverfahren unterworfen, das die Daten so umrechnet, daß ein virtuelles Bild mit normierter Fingerhaltung entsteht, das Grundlage des Vergleichs ist.

In der deutschen Patentschrift DE 196 12 949 C1 ist bereits eine virtuelle Eingabeeinheit vorgeschlagen worden, die eine Bedienoberfläche nach Art eines Eingabetabletts aufweist, die von einer Tischplatte gebildet ist. Auf die Tischplatte wird von einem Videoprojektor ein Bild der Tastenfläche einer Tastatur projiziert. Eine elektronische Kamera nimmt die in typischer Zeigeposition ausgestreckte Hand eines die Eingabeeinrichtung betätigenden Benutzers auf und leitet die Bilddaten einem Rechner zu. Der auf ein Detail der Eingabeeinrichtung weisende Finger und dessen Position bezüglich der Bedienoberfläche werden in einem Mustererkennungsverfahren als solche erkannt.

Aus der US-Patentschrift 5,528,263 ist es auch bereits bekannt, eine mit einem Zeigestock auf ein Eingabefeld weisende Hand zu erkennen.

Die bekannten Anordnungen eignen sich gut zur Erhöhung der Vandalismus- und Abhörsicherheit von Eingabetastaturen, da zum einen bewegliche Teile wie Tastenknöpfe fehlen, die blockiert werden könnten. Zum anderen würde ein Vorbau auf einer ebenen Projektionsfläche sofort auffallen. Zur Sicherstellung des gesamten Gerätebedienungsvorganges eines Selbstbedienungsgerätes sind die bekannten Anordnungen jedoch nicht geeignet.

Aufgabe der Erfindung ist es, ein Verfahren zur Überwachung eines Gerätebedienungsvorganges vorzuschlagen, sowie eine mit diesem überwachte Selbstbedienungseinrichtung.

Der verfahrensbezogene Teil der Aufgabe wird durch die Merkmale des Anspruchs 1 und der anordnungsbezogene Teil der Aufgabe durch die Merkmale des Anspruchs 6 gelöst.

Mit Hilfe eines optischen Mustererkennungsverfahrens wird die für den jeweiligen Gerätebedienungsvorgang charakteristische Handhaltung allein oder auch zusammen mit einem bei einer Gerätebenutzung zu handhabenden Gegenstand sowie deren Bewegungsrichtung erfaßt und mit einem vorgegebenen Muster verglichen, und abhängig von dem Vergleichsergebnis wird ein das weitere Geräteverhalten beeinflussendes Signal erzeugt.

Damit wird es möglich, bereits vor einem Bedienungsschritt festzustellen, ob die dafür typische Handhaltung eingenommen wurde. Beispielsweise hat die Hand einer Person, welche im Begriff steht, eine Ausweis- oder Kreditkarte in einen Kartenleser einzuführen, eine andere Haltung als die Hand, welche sich anschickt, ein von einem Geldautomaten bereitgestelltes Banknotenbündel zu ergreifen. Im ersten Fall wird die Hand außerdem eine Ausweis- oder Kreditkarte halten. Eine leere Hand oder eine Hand, die einen Gegenstand mit einem anderen Format als dem Ausweiskartenformat hält, wird als solche erkannt. Es wird dann ein ein negatives Vergleichsergebnis repräsentierendes Signal erzeugt, das z.B. dazu verwendet werden kann, eine Sperre in der Karteneinführöffnung des Kartenlesers zu schließen oder erst gar nicht zu öffnen.

Von einer Hand, welche sich anschickt, ein Banknotenbündel zu ergreifen, wird eine typische Greifhaltung erwartet. Außerdem wird diese Hand leer sein. Wird etwas anderes erkannt, kann das Geldentnahmefach rechtzeitig geschlossen oder erst gar nicht geöffnet werden oder ein dargebotenes Banknotenbündel zurückgezogen werden.

Eine Hand, die sich einem Depositfach nähert, wird im allgemeinen einen zu deponierenden Gegenstand halten und eine Haltung einnehmen, die das Einführen des Gegenstandes in die Eingabeöffnung ermöglicht. Die Sicherheit vor nicht zu akzeptierenden Gegenständen kann noch dadurch erhöht werden, daß zuvor ein Kuvert bereitgestellt wird, in das der zu deponierende Gegenstand eingelegt werden muß. Ein solches Kuvert ist dann leicht wiederzuerkennen.

In einer Telefonzelle kann eine nach dem Handapparat greifende oder diesen haltende Hand ebenfalls an ihrer typischen Haltung erkannt werden.

Umfaßt der Gerätebedienungsvorgang wenigstens zwei Bedienungsschritte mit jeweils einer charakteristischen Handhaltung, wird ein auf einen Bedienungsschritt folgender nächster Bedienungsschritt erst freigegeben, wenn das Vergleichsergebnis des einen Bedienungsschritts positiv ist, also ein ein positives Vergleichsergebnis repräsentierendes Signal abgegeben wird.

Bei einem negativen Vergleichsergebnis, also einem ein negatives Vergleichsergebnis repräsentierendes Signal, wird ein akustischer und/oder visueller Benutzungshinweis ausgelöst und/oder ein Fehlermeldesignal erzeugt, welches einen Alarm auslöst und/oder eine Kamera einschaltet, welche die das negative Vergleichsergebnis verursachende Person konterfeit.

Der Grad der Übereinstimmung zwischen dem vorgegebenen und dem erfaßten Muster, welcher zur Abgabe eines ein positives Vergleichsergebnis meldenden Signals erforderlich ist, ist vorzugsweise vorwählbar. Damit wird es möglich, den Toleranzbereich des verwendeten Mustererkennungsverfahrens abhängig vom zu überwachenden Gerätebedienungsvorgang schärfer oder unkritischer einzustellen.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigt
- Fig. 1: ein Selbstbedienungsgerät in perspektivischer Vorderansicht,
- Fig. 2-6: charakteristische Handhaltungen bei verschiedenen Bedienungsvorgängen.

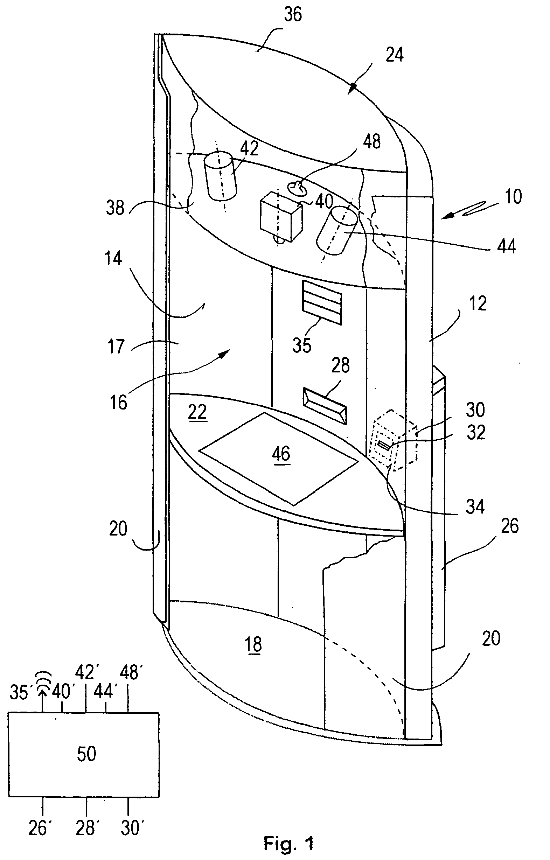

In Fig. 1 ist ein Selbstbedienungsgerät allgemein mit 10 bezeichnet. Wesentliches Konstruktionselement ist ein aufrecht stehendes, innen hohles Wandelement 12 mit einem bogenförmigem Querschnittsprofil. Die konkave Fläche 14 des Wandelements 12 ist die Bedienseite 16 des Selbsbedienungsgerätes 10. Das Wandelement 12 ist auf einer Bodenplatte 18 aufgestellt. Seitlich sind an das Wandelement 12 Sichtschutzblenden 20 angesetzt. Über der Bodenplatte 18 und parallel zu dieser ist etwa in genormter Tischhöhe eine Platte 22 angeordnet. Nach oben ist das Selbsbedienungsgerät 10 durch einen Aufsatz 24 abgeschlossen, dessen Aufbau weiter unten noch erläutert wird.

An die Rückseite des Wandelements 12 ist ein Geldautomat 26 angesetzt, dessen Geldfach 28 oberhalb der Platte 22 das Wandelement 12 durchdringt und damit von der Bedienseite 16 her zugänglich ist. Geldautomaten und zugehörige Geldfachklappen sind allgemein bekannt und deshalb nicht näher beschrieben. Neben dem Geldfach 28 ist ein Kartenleser 30 in das Wandelement 12 eingebaut, der entweder als Einsteckleser mit einer Karteneinführöffnung 32 oder als kontaktloser Leser mit einer Induktionsfläche 34 ausgebildet sein kann. Über dem Geldfach 28 ist in dem Wandelement 12 ein weiteres Fach 35 angeordnet, das durch eine transparente Abdeckung verschlossen ist. Hinter dieser ist eine nicht dargestellte Videokamera und ein Näherungssensor 35' angeordnet. Der oberhalb der Platte 22 angeordnete Abschnitt des Wandelements 12 bildet den Bedienbereich 17 des Selbstbedienungsgerätes 10.

Der Aufsatz 24 ist als Hohlkörper mit einer Deckplatte 36 und einer dazu parallelen unteren Begrenzungswand 38 ausgebildet. Im Inneren des Aufsatzes 24 sind auf die Begrenzungswand 38 eine elektronische Kamera 40, ein Videoprojektor 42 und eine Beleuchtungseinrichtung 44 so aufgesetzt, daß die Kamera 40 den Raum oberhalb der Platte 22 zu erfassen vermag, der Videoprojektor 42 ein Bild, beispielsweise der Tastenfläche einer Tastatur, auf eine Projektionsfläche 46 auf der Platte 22 scharf abzubilden vermag und die Beleuchtungseinrichtung 44 den Raum oberhalb der Platte 22 gleichmäßig ausleuchtet. Außerdem ist in die untere Begrenzungswand 38 ein Lautsprecher 48 eingebaut, der den Bereich zwischen dem Wandelement 12 und den Sichtschutzblenden 20 beschallt.

Das Selbsbedienungsgerät 10 wird von einem nur symbolisch dargestellten Datenverarbeitungsgerät 50 gesteuert, welches in das Wandelement 12 eingebaut ist und in Fig. 1 nur aus Gründen der Übersichtlichkeit außerhalb des Selbsbedienungsgerätes 10 gezeigt ist. An das Datenverarbeitungsgerät 50 ist der Näherungssensor 35' und über eine Anschlußleitung 40' die Kamera 40, über eine Anschlußleitung 42' der Videoprojektor 42, über eine Anschlußleitung 44' die Beleuchtungseinrichtung 44 und über eine Anschlußleitung 48' der Lautsprecher 48 angeschlossen. Der Geldautomat 26 wird über eine Steuerleitung 26' ebenfalls von dem Datenverarbeitungsgerät 50 gesteuert. Die Steuerung des Geldfachs 28 erfolgt über eine Steuerleitung 28' und der Kartenleser 30 ist über eine Steuerleitung 30' mit dem Datenverarbeitungsgerät 50 verbunden. Mit Hilfe des Datenverarbeitungsgerätes 50 wird auch ein Programm zur Durchführung des oben genannte Mustererkennungsverfahrens betrieben.

Nachfolgend wird die Arbeitsweise des Selbsbedienungsgerätes 10 beschrieben. Bei Annäherung einer Person an das Selbsbedienungsgerät 10 spricht der Näherungssensor 35' an, worauf unter Steuerung des Datenverarbeitungsgerätes 50 der Videoprojektor 42 eine Bedienungsanleitung auf die Projektionsfläche 46 projiziert, die u.a. die Weisung enthält, eine Ausweis- oder Kreditkarte zu benutzen. Zugleich wird die Kamera 40 und die Beleuchtungseinrichtung 44 in Betrieb genommen.

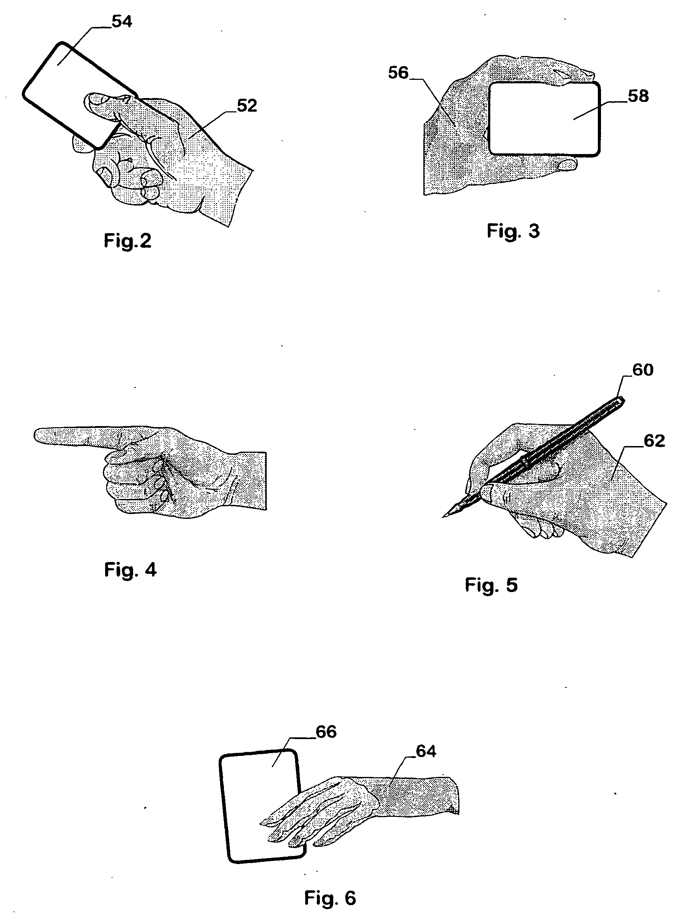

Ist der Kartenleser 30 mit einer Karteneinführöffnung 32 ausgestattet, wird von dem Mustererkennungsprogramm das Bild einer Hand 52 erwartet, die in der in Fig. 2 gezeigten Weise eine Ausweis- oder Kreditkarte 54 hält. Werden von der Kamera 40 auch noch Bildsignale an das Datenverarbeitungsgerät 50 abgegeben, die eine Bewegung der die Ausweis- oder Kreditkarte 54 haltenden Hand 52 in Richtung der Karteneinführöffnung 32 erkennen lassen, wird letztere freigegeben, so daß die Ausweis- oder Kreditkarte 54 in den Kartenleser 30 eingeführt werden kann. Ist der Kartenleser 30 hingegen mit einer Induktionsfläche 34 ausgestattet, wird von dem Mustererkennungsprogramm das Bild einer Hand 56 erwartet, die in der in Fig. 3 gezeigten Handhaltung eine Ausweis- oder Kreditkarte 58 an der Induktionsfläche 34 vorbeiführt.

Wurde das erwartete Muster erkannt, wird das Datenverarbeitungsgerät 50 von der Betriebsart "Überwachen eines Gerätebedienungsvorganges" auf die Betriebsart "Virtuelle Eingabe" umgeschaltet und der nächste Bedienungsschritt eingeleitet. In diesem wird die Tastenfläche einer Tastatur auf der Projektionsfläche 46 abgebildet. Diese Tastenfläche mag bei dem als Ausführungsbeispiel eines Selbstbedienungsgerätes 10 gewählten Geldautomaten Auswahltasten für verschiedene Gerätefunktionen wie 'Auszahlung', 'Einzahlung' oder 'Kontoauszug drucken' umfassen. Hierbei wird eine Handhaltung entsprechend Fig. 4 erwartet. Zusätzlich oder alternativ dazu kann auch eine "Tastenbetätigung" mit einem Stift 60 zugelassen sein, der von einer Hand 62 in einer dafür charakteristischen Handhaltung gemäß Fig. 5 gehalten wird. Ein Erkennungsverfahren für Tastatureingaben ist in der DE 196 12 949 C1 ausführlich beschrieben.

Für den nächsten Bedienschritt wird -unter der Annahme, die Gerätefunktion 'Einzahlung' sei gewählt worden- das Datenverarbeitungsgerät 50 wieder von der Betriebsart "Virtuelle Eingabe" auf die Betriebsart "Überwachen eines Gerätebedienungsvorganges" umgeschaltet. Dabei wird das Bild einer in Fig. 6 dargestellten Hand 64 erwartet, die ein Kuvert 66 hält. Werden von der Kamera 40 auch noch Bildsignale an das Datenverarbeitungsgerät 50 abgegeben, die eine Bewegung der das Kuvert 66 führenden Hand 64 in Richtung des Geldfachs 28 erkennen lassen, wird letzteres freigegeben, so daß das Kuvert 66 in das Geldfach 28 eingeführt werden kann. Ist die Gerätefunktion 'Auszahlung' gewählt, bei der in dem Geldfach 28 eine Banknote oder ein Banknotenbündel bereitgestellt wird, wird ebenfalls die in Fig. 6 dargestellte Handhaltung erwartet. Dabei muß die Hand 64 aber leer sein.

Wurde einer der genannten Bedienschritte oder eine Tastatureingabe nicht erkannt, wird von dem Datenverarbeitungsgerät 50 ein ein negatives Vergleichsergebnis repräsentierendes Signal erzeugt, das z.B. die in dem weiteren Fach 35 angeordnete videokamera in Betrieb setzt, welch letztere den Gerätebenutzer konterfeit. Alternativ oder zusätzlich dazu kann der nächste Bedienschritt blockiert werden. Es kann auch zwischen verschiedenen Fehlbedienungsarten unterschieden werden: Bei Bedienungsfehlern, die nicht auf eine böswillige Attacke auf das Selbstbedienungsgerät 10 schließen lassen, kann z.B. der Gerätebenutzer durch eine über den Lautsprecher 48 ausgegebene akustische Information zur Wiederholung des letzten Bedienschritts aufgefordert werden. Auch kann auf die Projektionsfläche 46 eine ausführliche Bedienungsanleitung projiziert werden.

Die Erfindung ist nicht auf Geldautomaten beschränkt. Sie kann vielmehr bei Geräten jedweder Art eingesetzt werden, deren Bedienung charakteristische Handhaltungen erfordert. Als Selbstbedienungsgeräte im Sinne der Erfindung z.B. können auch Waren- oder Dienstleistungsautomaten, Telefonzellen mit einem Fernsprechautomaten oder auch zusätzlich einem Telefax- oder E-mail-Anschluß, Gepäck- oder Postschließfachanlagen gelten.

## Patentansprüche

1. Verfahren zur Überwachung eines Gerätebedienungsvorganges, bei dem mit Hilfe eines optischen Mustererkennungsverfahrens eine für einen Gerätebedienungsvorgang charakteristische Handhaltung erfaßt und mit einem vorgegebenen Muster verglichen und abhängig von dem Vergleichsergebnis ein das weitere Geräteverhalten beeinflussendes Signal erzeugt wird,
**dadurch gekennzeichnet,**
**daß** die Bewegungsrichtung einer die für den Gerätebedienungsvorgang charakteristische Handhaltung einnehmenden Hand (52, 56, 62, 64) allein oder auch zusammen mit einem bei einer Gerätebenutzung zu handhabenden Gegenstand (54, 58, 60, 66) erfaßt und dem Mustererkennungsverfahren unterworfen wird.

2. Verfahren nach Anspruch 1, **dadurch** ge- kennzeichnet , daß der Gerätebedienungsvorgang wenigstens zwei Bedienungsschritte mit jeweils einer charakteristischen Handhaltung oder auch Bewegungsrichtung umfaßt, und daß ein auf einen Bedienungsschritt folgender nächster Bedienungsschritt erst freigegegeben wird, wenn das Vergleichsergebnis des einen Bedienungsschritts positiv ist.

3. Verfahren nach Anspruch 1 oder 2, **dadurch gekennzeichnet , daß** bei einem negativen Vergleichsergebnis ein akustischer und/oder visueller Benutzungshinweis ausgelöst und/oder ein Fehlermeldesignal erzeugt wird, welches einen Alarm auslöst und/oder eine Kamera einschaltet, welche den das negative Vergleichsergebnis verursachenden Benutzer konterfeit.

4. Verfahren nach einem der Ansprüche 1 bis 3, da - durch **gekennzeichnet** , daß der Grad der Übereinstimmung zwischen dem vorgegebenen und dem erfaßten Muster, welcher zur Abgabe eines ein positives Vergleichsergebnis meldenden Signals erforderlich ist, vorwählbar ist.

5. Verfahren nach einem der vorhergehenden Ansprüche, **dadurch gekennzeichnet , daß** ein die Mustererkennung durchführendes Datenverarbeitungsgerät (50) zwischen der Betriebsart "Überwachen eines Gerätebedienungsvorganges" und einer Betriebsart "Virtuelle Eingabe" umschaltbar ist, bei welch letzterer eine Tastenfläche einer Tastatur auf eine Projektionsfläche (46) projiziert wird und das Muster einer in Zeigeposition ausgestreckten Hand sowie deren Position bezüglich der Tastenfläche erfaßt wird.

6. Selbstbedienungseinrichtung, welche mit Hilfe des Verfahrens nach einem der Ansprüche 1 bis 5 überwacht wird, umfassend eine elektronische Kamera (40) und ein Bildinformationen verarbeitendes Datenverarbeitungsgerät (50), in welchem Bildmuster gespeichert sind, und in dem ein Vergleicher angeordnet ist, mit dem eine von der Kamera (40) gelieferte Bildinformation mit einem gespeicherten Bildmuster verglichen wird, und der abhängig von dem Vergleichsergebnis ein das weitere Geräteverhalten beeinflussendes Signal erzeugt,
**dadurch gekennzeichnet ,**
**daß** die in dem Datenverarbeitungsgerät (50) gespeicherten Muster der für den jeweiligen Gerätebedienungsvorgang charakteristischen Handhaltung allein oder auch zusammen mit dem bei der Gerätebenutzung zu handhabenden Gegenstand entsprechen,
**daß** in dem Datenverarbeitungsgerät (50) Bewegungsvektoren einer die für den jeweiligen Gerätebedienungsvorgang charakteristische Handhaltung einnehmenden Hand (52, 56, 62, 64) allein oder auch zusammen mit dem bei einer Gerätebenutzung zu handhabenden Gegenstand (54, 58, 60, 66) gespeichert sind
und **daß** der Vergleicher eine mit der Kamera (40) erfaßte Bewegungsabfolge der Hand mit den gespeicherten Bewegungsvektoren vergleicht.

7. Selbstbedienungseinrichtung nach Anspruch 6, da - durch **gekennzeichnet** , daß die Kamera (40), eine Beleuchtungseinrichtung (44) und ein Videoprojektor (42) in einem einen Bedienbereich (17) nach oben abschließenden Aufsatz (24) angeordnet sind.

8. Selbstbedienungseinrichtung nach Anspruch 7, da - durch **gekennzeichnet** , daß der Bedienbereich (17) nach unten durch eine eine Projektionsfläche (46) umfassende Platte (22) begrenzt ist.

## Claims

1. Method for monitoring an equipment operation procedure, in which an optical pattern recognition method is used to detect a hand posture which is characteristic of an equipment operation procedure and to compare said hand posture with a prescribed pattern, and a signal influencing the further response of the equipment is produced on the basis of the comparison result,
**characterized**
**in that** the direction of movement of a hand (52, 56, 62, 64) assuming the hand posture which is characteristic of the equipment operation procedure is detected alone or else together with an object (54, 58, 60, 66) to be handled when using equipment, and is subjected to the pattern recognition method.

2. Method according to Claim 1, **characterized in that** the equipment operation procedure comprises at least two operating steps each having a characteristic hand posture or else direction of movement, and **in that** a subsequent operating step following one operating step is not enabled until the comparison result for the one operating step is positive.

3. Method according to Claim 1 or 2, **characterized in that** if the comparison result is negative, an audible and/or visual operating tip is given and/or an error message signal is produced which triggers an alarm and/or turns on a camera which portrays the user causing the negative comparison result.

4. Method according to one of Claims 1 to 3, **characterized in that** the degree of correspondence between the prescribed pattern and the detected pattern, which degree of correspondence is necessary for the output of a signal reporting a positive comparison result, can be preselected.

5. Method according to one of the preceding claims, **characterized in that** a data processing unit (50) carrying out the pattern recognition can be changed over between the "monitor an equipment operation procedure" mode of operation and a " virtual input" mode of operation, in which latter case a key area of a keypad is projected onto a projection surface (46) and the pattern of a hand outstretched in a pointing position, and also its position with respect to the key area, are detected.

6. Self-service device which is monitored using the method according to one of Claims 1 to 5, comprising an electronic camera (40) and a data processing unit (50) which processes image information and stores image patterns, and which contains a comparator which is used to compare an image information item supplied by the camera (40) with a stored image pattern and produces a signal influencing the further response of the equipment on the basis of the comparison result,
**characterized**
**in that** the patterns stored in the data processing unit (50) correspond to the hand posture which is characteristic of the respective equipment operation procedure alone or else together with the object to be handled when using the equipment,
**in that** the data processing unit (50) stores movement vectors for a hand (52, 56, 62, 64) assuming the hand posture which is characteristic of the respective equipment operation procedure alone or else together with the object (54, 58, 60, 66) to be handled when using equipment,
and **in that** the comparator compares a movement sequence for the hand, recorded by the camera (40), with the stored movement vectors.

7. Self-service device according to Claim 6, **characterized in that** the camera (40), an illumination device (44) and a video projector (42) are arranged in a headpiece (24) closing off an operating area (17) at the top.

8. Self-service device according to Claim 7, **characterized in that** the operating area (17) is bounded at the bottom by a plate (22) comprising a projection surface (46).

## Revendications

1. Procédé de surveillance d'une opération de service d'un appareil, dans lequel on détecte, à l'aide d'un procédé optique de reconnaissance de modèle, un comportement de la main caractéristique pour une opération de service d'un appareil et on le compare à un modèle prescrit et on produit, en fonction du résultat de la comparaison, un signal influant sur le comportement ultérieur de l'appareil,
**caractérisé**
**en ce que** l'on détecte la direction de mouvement d'une main (52, 56, 62, 64) prenant le comportement caractéristique pour l'opération de service de l'appareil seule ou également ensemble avec un objet (54, 58, 60, 66) à manipuler lors de l'utilisation de l'appareil et on la soumet au procédé de reconnaissance de modèle.

2. Procédé suivant la revendication 1, **caractérisé en ce que** l'opération de service de l'appareil comprend au moins deux stades de service ayant, respectivement, un comportement de la main caractéristique ou également une direction de mouvement caractéristique, et **en ce que** l'on ne donne accès au stade de service venant immédiatement après un premier stade de service que si le résultat de la comparaison du premier stade de service est positif.

3. Procédé suivant la revendication 1 ou 2, **caractérisé en ce que** si le résultat de la comparaison est négatif, on déclenche une indication acoustique et/ou visuelle d'utilisation et/ou un signal d'indication d'erreur qui déclenche une alerte et/ou qui branche une caméra qui prend le portrait de l'utilisateur provoquant le résultat de comparaison négatif.

4. Procédé suivant l'une des revendications 1 à 3, **caractérisé en ce que** l'on peut choisir à l'avance le degré de coïncidence entre le modèle prescrit et le modèle détecté qui est nécessaire pour l'émission d'un signal indiquant un résultat de comparaison positif.

5. Procédé suivant l'une des revendications précédentes, **caractérisé en ce que** l'on peut commuter un appareil (50) informatique effectuant la reconnaissance de modèle entre le type de fonctionnement "surveillance d'une opération de service d'un appareil" et un type de fonctionnement "entrée virtuelle", alors que dans ce dernier cas une surface d'une touche d'un clavier est projetée sur une surface (46) de projection et le modèle d'une main, dont l'index est tendu, ainsi que sa position par rapport à la surface de la touche est détectée.

6. Dispositif de self-service qui est surveillé à l'aide du procédé suivant l'une des revendications 1 à 5, comprenant une caméra (40) électronique et un appareil (50) informatique de traitement d'information d'images, dans lequel des modèles d'image sont mémorisés et dans lequel est disposé un comparateur par lequel une information d'image fournie par une caméra (40) est comparée à un modèle d'image mémorisé et qui produit, en fonction du résultat de la comparaison, un signal influençant le comportement ultérieur de l'appareil,
**caractérisé**
**en ce que** les modèles mémorisés dans l'appareil (50) informatique correspondent au comportement de la main caractéristique pour l'opération respective de service de l'appareil seule ou aussi ensemble avec l'objet à manipuler pour l'utilisation de l'appareil,
**en ce que** dans l'appareil (50) informatique sont mémorisés des vecteurs de mouvement d'une main (52, 56, 62, 64) prenant le comportement caractéristique pour l'opération respective de service de l'appareil seule ou aussi ensemble avec l'objet (54, 58, 60, 66) à manipuler lors d'une utilisation de l'appareil
et **en ce que** le comparateur compare une succession de mouvements détectés par la caméra (40) aux vecteurs de mouvement mémorisé.

7. Dispositif de self-service suivant la revendication 6, **caractérisé en ce que** la caméra (40), un dispositif (44) d'éclairage et un projecteur (42) vidéo sont disposés dans une coiffe (24) fermant vers-le haut la zone (17) de service.

8. Dispositif de self-service suivant la revendication 7, **caractérisé en ce que** la zone (17) de service est délimitée vers le bas par une plaque (22) entourant une surface (46) de projection.
